# EUROPEAN PATENT APPLICATION

(11) **EP 4 425 623 A1**
(43) Date of publication of application: **04.09.2024**
(21) Application number: 22949781.3
(22) Date of filing: 06.07.2022
(51) Int. Cl.: H01M 10/04

(54) **BATTERY CELL STACKING APPARATUS AND BATTERY ASSEMBLING APPARATUS**

(71) Applicant: Contemporary Amperex Technology Co., Limited, Ningde, Fujian 352100 (CN)
(72) Inventor: LIU, Xiaolong, Ningde, Fujian 352100 (CN); HU, Xiaofeng, Ningde, Fujian 352100 (CN)
(74) Representative: Gong, Jinping
(86) International application number: PCT/CN2022/104123
(87) International publication number: WO 2024/007193

(57) **Abstract**

Embodiments of the present application provide a cell stacking apparatus and a battery assembling apparatus. The cell stacking apparatus includes a first limiting device (10), a second limiting device (20), and a third limiting device (30), the first limiting device (10) is configured to limit a bottom face (711) of a cell (70), the second limiting device (20) is configured to limit a first side (712) of the cell (70), and the third limiting device (30) is configured to limit a second side (713) of the cell (70), wherein the bottom face (711), the first side (712), and the second side (713) intersect one another. The battery assembling apparatus includes the cell stacking apparatus.

## Description

### TECHNICAL FIELD

The present application relates to the field of battery technologies, and in particular, to a cell stacking apparatus and a battery assembling apparatus.

### BACKGROUND ART

Energy saving and emission reduction are the key to the sustainable development of automobile industry, and electric vehicles have become an important part of the sustainable development of automotive industry due to their advantages of energy saving and environmental protection. For electric vehicles, battery technology is an important factor related to their development.

During assembly of a battery, stacking quality of cells is crucial for whether subsequent battery modules can be formed, and plays a very important role in the assembly of the entire battery.

### SUMMARY OF THE INVENTION

The present application provides a cell stacking apparatus and a battery assembling apparatus, which may improve stacking quality of cells and thereby increase success rate when a module is formed subsequently.

In a first aspect, the present application provides a cell stacking apparatus, including:
a first limiting device configured to limit a bottom face of a cell;
a second limiting device configured to limit a first side of the cell; and
a third limiting device configured to limit a second side of the cell,
wherein the bottom face, the first side and the second side intersect one another.

By providing the first limiting device, the second limiting device, and the third limiting device, the bottom face, the first side, and the second side of the cell may be limited separately. The first limiting device not only limits the bottom face of the cell, but also may support gravity of the entire cell, and the bottom face, the first side, and the second side intersect one another, that is, the bottom face, the first side, and the second side are adjacent to one another. Therefore it is possible to limit three sides of the cell, thereby positioning the single cell, improving stacking quality, avoiding the problem of rework due to detecting unsatisfactory stacking quality after stacking is complete, and effectively improving stacking efficiency; further, it is also possible to improve the probability of successful forming of a module composed of multiple cells and improve assembly efficiency of an entire battery.

In some embodiments, the cell stacking apparatus further includes at least one of a fourth limiting device, a fifth limiting device, and a sixth limiting device,
the fourth limiting device is configured to drive the cell to move along a direction perpendicular to a top face of the cell and is used to limit the top face;
the fifth limiting device is configured to drive the cell to move along a direction perpendicular to a third side of the cell and is used to limit the third side, the third side being arranged opposite to the first side; and
the sixth limiting device is configured to drive the cell to move along a direction perpendicular to a fourth side of the cell and is used to limit the fourth side, the fourth side being arranged opposite to the second side.

With the fourth limiting device, the cell may be driven to move along the direction perpendicular to the top face of the cell, enabling the cell to move to where the bottom face of the cell is in touch with a limiting portion of the first limiting device under the driving of the fourth limiting device. Further, the fourth limiting device may also limit the top face of the cell after stopping moving, thereby achieving the purpose of limiting the cell between the first limiting device and the fourth limiting device, and achieving simultaneous limiting of the bottom and top faces of the cell.

With the fifth limiting device, the cell may be driven to move along the direction perpendicular to the third side of the cell, enabling the cell to move to where the first side of the cell is in touch with a limiting portion of the second limiting device under the driving of the fifth limiting device. Further, the fifth limiting device may also limit the third side of the cell after stopping moving, thereby achieving the purpose of limiting the cell between the second limiting device and the fifth limiting device, and achieving simultaneous limiting of the first and third sides of the cell.

With the sixth limiting device, the cell may be driven to move along the direction perpendicular to the fourth side of the cell, enabling the cell to move to where the second side of the cell is in touch with a limiting portion of the third limiting device under the driving of the sixth limiting device. Further, the sixth limiting device may also limit the fourth side of the cell after stopping moving, thereby achieving the purpose of limiting the cell between the third limiting device and the sixth limiting device, and achieving simultaneous limiting of the second and fourth sides of the cell.

In some embodiments, the cell stacking apparatus further includes a fourth limiting device and a sixth limiting device, the fourth limiting device includes a first limiting member, and the first limiting member is configured to press against a top face of a cell while the sixth limiting device drives the cell to move along a direction perpendicular to a fourth side.

By providing the first limiting member and causing the first limiting member to press against the top face of the cell while the sixth limiting device drives the cell to move along the direction perpendicular to the fourth side, the process where the sixth limiting device drives the cell to move along the direction perpendicular to the fourth side can be achieved under the state of causing the cell to press against at the top face by the first limiting member, that is, the state of limiting the top face of the cell, such that positioning of a second side and the fourth side of the cell is achieved without changing the position of the top face of the cell, thereby preventing the position of the top face of the cell from being affected by the positioning process of the second side and the fourth side. After the positioning of the second side and the fourth side is completed, this, in fact, realizes the positioning of the second side, the fourth side, the bottom face, and the top face at the same time.

In some embodiments, the first limiting member includes a rolling member that is in rolling fit with a cell and/or a sliding member that is in sliding fit with the cell.

By providing the rolling member and/or the sliding member, frictional force between the first limiting member and the cell may be reduced, and resistance for relative movement of the cell relative to the first limiting member may be reduced.

In some embodiments, the first limiting member includes a plurality of rolling members and/or a plurality of sliding members, and the plurality of rolling members and/or the plurality of sliding members are arranged in spaced manner along a direction perpendicular to the first side.

By providing the plurality of rolling elements and/or the plurality of sliding elements, limiting and supporting for multiple positions of the top face may be achieved, thereby improving limiting effect on the top face.

In some embodiments, the fourth limiting device further includes a second limiting member, the second limiting member is located upstream of the first limiting member in a stacking direction of a plurality of cells, and the second limiting member separately presses against the top faces of the different cells.

By providing the second limiting member and disposing the second limiting member upstream of the first limiting member, it is possible to cause the second limiting member to press against a top face of another cell located upstream while the first limiting member presses against the top face of the cell located downstream, thereby limiting the top face of the cell located upstream and the top face of the cell located downstream at the same time, and avoiding the problem that misalignment of positions of the top faces of the upstream and downstream cells is caused when stacking another cell.

In some embodiments, when the first limiting member and a cell which it presses against move relatively, the second limiting member is configured to remain fixed relative to the cell which it presses against in a direction perpendicular to a second side.

By configuring the second limiting member to remain fixed relative to the cell which it presses against in the direction perpendicular to the second side, it is possible that there is no relative movement between the second limiting member and the cell which the second limiting member presses against in the direction perpendicular to the second side, thereby improving limiting effect of the second limiting member on the top face in a direction perpendicular to the top face, and in turn, maintaining relative stability of the cell that has been positioned.

In some embodiments, the second limiting member includes a limiting face that contacts a top face of a cell and limits the top face of the cell.

By providing the limiting face on the second limiting member, it is possible that there is face contact between the second limiting member and the top face of the cell, thereby enlarging limiting area for limiting the top face and improving limiting effect for the top face.

In some embodiments, the fifth limiting device includes one or more limiting members for limiting a third side of a cell, and the plurality of limiting members are arranged along a direction perpendicular to a second side.

In some embodiments, the cell stacking apparatus further includes a fourth limiting device, a fifth limiting device, and a sixth limiting device, the fifth limiting device includes one or more limiting members for limiting a third side of a cell, and the plurality of limiting members are arranged along a direction perpendicular to a second side.

In an embodiment in which the fifth limiting device includes one limiting member, when a plurality of cells are stacked along a direction perpendicular to second sides, limiting effect of the limiting member on the plurality of different cells may be achieved in a way of causing the fifth limiting device to move along the direction perpendicular to the second sides.

In an embodiment in which the fifth limiting device includes a plurality of limiting members and the plurality of limiting members are arranged along a direction perpendicular to a second side, limiting effect on a plurality of cells may be achieved through the plurality of limiting members, thereby reducing or omitting movement of the fifth limiting device along a direction perpendicular to the second side.

In some embodiments, at least one of one or more limiting members includes a third limiting member, the third limiting member includes an elastic member, and the elastic member is configured to provide elastic force in a direction perpendicular to the third side.

By providing the elastic member, the elastic force may be provided in the direction perpendicular to the third side, thereby allowing lengths of a plurality of cells to be different in the direction perpendicular to the third side.

During actual production, the lengths of the various cells may be different in the direction perpendicular to the third side due to manufacturing errors etc., and when at least one of the one or more limiting members includes the third limiting member, the third limiting member including the elastic member, the elastic member being configured to provide elastic force in the direction perpendicular to the third side, it may be avoided that difference in the lengths of the plurality of cells in the direction perpendicular to the third side affects limiting effect of other limiting members in the fifth limiting device on the third sides of other cells.

In some embodiments, the third limiting member further includes a first limiting plate connected to the elastic member, and the first limiting plate includes a limiting portion for limiting a third side of a cell.

By providing the first limiting plate, the limiting portion that is smoother and relatively greater in rigidity than the elastic member may be provided, thereby improving the limiting effect.

In some embodiments, at least one of the one or more limiting members includes a fourth limiting member, and the fourth limiting member is rigid in a direction perpendicular to a third side.

By providing the fourth limiting member as a structure that is rigid in the direction perpendicular to the third side, more certain limiting effect may be provided as compared to the third limiting member including an elastic member.

In some embodiments, the fifth limiting device further includes a mounting bracket, and one or more limiting members are mounted on the mounting bracket.

By providing the mounting bracket, the one or more limiting members may be mounted on the mounting bracket, thereby providing stable support for the one or more limiting members.

Moreover, with the one or more limiting members mounted on the mounting bracket, the one or more limiting members may be driven synchronously by means of driving the mounting bracket.

In some embodiments, the fourth limiting device and/or the fifth limiting device are configured to be movable in a direction perpendicular to a second side, so that when the number of stacked cells increases, limiting action on newly stacked cells may be achieved by means of causing the fourth limiting device and/or the fifth limiting device to move along the direction perpendicular to the second side.

In some embodiments, in a direction perpendicular to a bottom face, the height of the second limiting device is less than that of a cell.

By setting the height of the second limiting device to be less than that of the cell, area of a portion of a first side of the cell in touch with the second limiting device may be reduced, thereby reducing impact of planar flatness of the first side on limiting precision of the second limiting device, and in turn, effectively controlling overall positioning precision for the cell.

In some embodiments, the second limiting device includes a second limiting plate and a plurality of connecting plates disposed in spaced manner along a direction perpendicular to a second side, the connecting plates connect the second limiting plate and the first limiting device, the second limiting plate is in a long bar shape extending along the direction perpendicular to the second side, and in a direction perpendicular to a bottom face, the height of the second limiting plate is less than that of a cell.

By providing the connecting plates, the second limiting plate and the first limiting device may be connected together, that is, connection between the second limiting device and the first limiting device is achieved, and relative stability of the second limiting device and the first limiting device is improved.

By providing the connecting plates, a distance between the second limiting plate and the bottom face of the cell may also be increased in the direction perpendicular to the bottom face, thereby raising a limiting position of the second limiting plate for a first side, avoiding the problem that the cell is tipped over due to the limiting position of the second limiting plate for the first side being too low, and effectively improving positioning stability and safety of the cell.

The plurality of connecting plates may have a limiting action on the first side of the cell. By providing the plurality of connecting plates arranged in spaced manner, total area where the plurality of connecting plates limit the position of the cell may be reduced, thereby decreasing the impact of unevenness between limiting portions of the plurality of connecting plates on limiting precision for the first side. Of course, if a distance between a side of the second limiting plate close to the cell and the cell is set to be less than that between a side of the connecting plate close to the cell and the cell, then it is possible to cause the plurality of connecting plates to have no limiting action for the first side of the cell. At which time, the second limiting device limits the first side of the cell through the second limiting plate. The impact of the unevenness of the limiting portions of the plurality of connecting plates on the limiting precision for the cell is minimized.

The second limiting plate is arranged in the long bar shape extending along the direction perpendicular to the second side, and the second limiting plate may then be allowed to be continuous in the direction perpendicular to the second side, thereby ensuring a plurality of cells can all be limited by the second limiting plate when the plurality of cells are stacked along the direction perpendicular to the second side, and avoiding affecting of the limiting action on the certain cell due to there being a gap for the second limiting plate in the direction perpendicular to the second side.

The height of the second limiting plate is less than that of the cell in the direction perpendicular to the bottom face, and in this way, area of a portion of the first side of the cell in touch with the second limiting plate may be reduced, thereby reducing impact of planar flatness of the first side on limiting precision of the second limiting plate, and in turn, effectively controlling overall positioning precision for the cell.

In some embodiments, the third limiting device includes a plurality of limiting blocks arranged in spaced manner along a direction perpendicular to a first side.

By providing the plurality of limiting blocks arranged in spaced manner, limiting area of the third limiting device may be reduced by means of adding a gap, thereby decreasing impact of the flatness of a second side of a cell upon limiting precision of the third limiting device.

In a second aspect, the present application provides a battery assembling apparatus, including the cell stacking apparatus described above.

The above description is only an overview of the technical solutions of the present application. In order to more clearly understand the technical means of the present application to implement same according to the contents of the Specification, and in order to enable the above and other objectives, features and advantages of the present application to be more obvious and understandable, Detailed Description of the present application is exemplarily described below.

### DESCRIPTION OF DRAWINGS

In order to illustrate the technical solutions of the embodiments of the present application more clearly, the drawings required in the embodiments of the present application will be briefly introduced below. Obviously, the drawings described below are only some embodiments of the present application. For those of ordinary skill in the art, other drawings can also be obtained according to the drawings without any creative effort.
FIG. 1 is a structural schematic diagram of some embodiments of an electrical device employing a battery assembled by using a cell stacking apparatus disclosed in the present application;
FIG. 2 is a structural schematic diagram of some embodiments of a battery assembled by using a cell stacking apparatus disclosed in the present application;
FIG. 3 is a structural schematic diagram of some embodiments of a cell stacking apparatus disclosed in the present application;
FIG. 4 is a structural schematic diagram of a cell applicable to some embodiments of a cell stacking apparatus disclosed in the present application;
FIG. 5 is a structural schematic diagram of a cell applicable to further embodiments of a cell stacking apparatus disclosed in the present application;
FIG. 6 is a structural schematic diagram of a first limiting device, a second limiting device, and a third limiting device in some embodiments of a cell stacking apparatus disclosed in the present application;
FIG. 7 is a structural schematic diagram of a first limiting member in some embodiments of a cell stacking apparatus disclosed in the present application;
FIG. 8 is a structural schematic diagram of a second limiting member in some embodiments of a cell stacking apparatus disclosed in the present application;
FIG. 9 is a structural schematic diagram of a fifth limiting device in some embodiments of a cell stacking apparatus disclosed in the present application;
FIG. 10 is a structural schematic diagram of a fifth limiting device in further embodiments of a cell stacking apparatus disclosed in the present application;
FIG. 11 is a structural schematic diagram of further embodiments of a cell stacking apparatus disclosed in the present application; and
FIG. 12 is a structural schematic diagram of a sixth limiting device in some embodiments of a cell stacking apparatus disclosed in the present application.

In the drawings, the drawings are not drawn to actual scale.

### Description of reference numerals:

1000. Vehicle; 100. Battery; 200. Axle; 300. Wheel; 400. Motor; 500. Controller;
10. First limiting device; 20. Second limiting device; 30. Third limiting device; 40. Fourth limiting device; 50. Fifth limiting device; 60. Sixth limiting device; 70. Cell; 80. Box assembly; 80a. Box body; 80b. Cover;
21. Second limiting plate; 22. Connecting plate;
31. Limiting block;
41. First limiting member; 411. Rolling member; 412. First connecting shaft; 42. Second limiting member;
51. Third limiting member; 511. Elastic member; 512. First limiting plate; 52. Fourth limiting member; 53. Mounting bracket;
61. Third limiting plate; 62. Second connecting shaft;
71. Cell body; 711. Bottom face; 712. First side; 713. Second side; 714. Top face; 715. Third side; 716. Fourth side; 72. Terminal; 73. Spacer.

### DETAILED DESCRIPTION

Embodiments of the technical solutions of the present application will be described in detail below in conjunction with the drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "include/comprise" and "have" and any variations thereof in the Specification and the Claims of the present application and in the Description of Drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In addition, the term "perpendicular" is not strictly perpendicular, but within the margin of errors allowed. "Parallel" is not strictly parallel, but within the margin of errors allowed.

Reference herein to "an embodiment" means that a particular feature, structure, or characteristic described in connection with the embodiment may be contained in at least one embodiment of the present application. The appearance of this phrase in various places in the Specification does not necessarily refer to the same embodiment, nor is it a separate or alternative embodiment that is mutually exclusive with other embodiments. It is explicitly and implicitly understood by those skilled in the art that the embodiment described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally represents that previous and next associated objects form an "or" relationship.

In the description of the embodiments of the present application, the term of "a plurality of refers to two or more, unless otherwise explicitly and specifically defined. Similarly, "a plurality of sets" refers to two or more sets, and "a plurality of sheets" refers to two or more sheets, unless otherwise explicitly and specifically defined.

In the description of the embodiments of the present application, the orientation or position relationship indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application may be understood according to specific situations.

Currently, from the perspective of development of the market situation, power batteries are more and more widely applied. The power batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of the power batteries, market demands for electric vehicle batteries are also expanding.

The inventor of the present application has noticed that as the demand for power batteries continues to increase, higher requirements have been put forward for assembly efficiency of the battery. During assembly of a battery, cell stacking is a very important step.

After careful study on a cell stacking process, the inventor found that in related art, in order to improve quality of cell stacking, stacking quality will be detected through a detection device after stacking is complete, and if it is discovered that some cells are not aligned, all cells in this module are returned to an original station for re-stacking. This detection way can waste a lot of time, greatly reduce stacking efficiency, and thus reduce assembly efficiency of the battery.

In order to improve the stacking efficiency, the inventor proposes a cell stacking apparatus, the apparatus includes three limiting devices, and these three limiting devices respectively limit three sides of a cell intersecting one another, thereby allowing for three-side positioning of the singe cell, thus achieving precise positioning of the entire module, avoiding the problem of rework due to detecting cells with unsatisfactory stacking quality through inspection after stacking is complete, effectively saving time, and improving the stacking efficiency.

The cell stacking apparatus disclosed in the embodiments of the present application is applicable to a battery assembling apparatus. As a constituent portion of the battery assembling apparatus, the cell stacking apparatus may improve cell stacking efficiency in the cell stacking procedure, thereby improving the assembly efficiency of the entire battery.

A battery assembled by using the cell stacking apparatus and battery assembling apparatus disclosed in the embodiments of the present application is applicable to various electrical devices, such as a mobile phone, a portable device, a laptop, an electric bike, an electric vehicle, a ship, a spacecraft, an electronic toy, an electric tool, etc. For example, the spacecraft includes an airplane, a rocket, a space shuttle, a spaceship and the like; the electronic toy includes a fixed or mobile electric toy, such as a game console, a toy electric vehicle, a toy electric ship, a toy electric aircraft and the like; and the electric tool includes a metal-cutting power tool, a grinding power tool, an assembly power tool and a railway power tool, such as an electric drill, an electric grinder, an electric wrench, an electric screwdriver, an electric hammer, an electric impact drill, a concrete vibrator, and an electric planer.

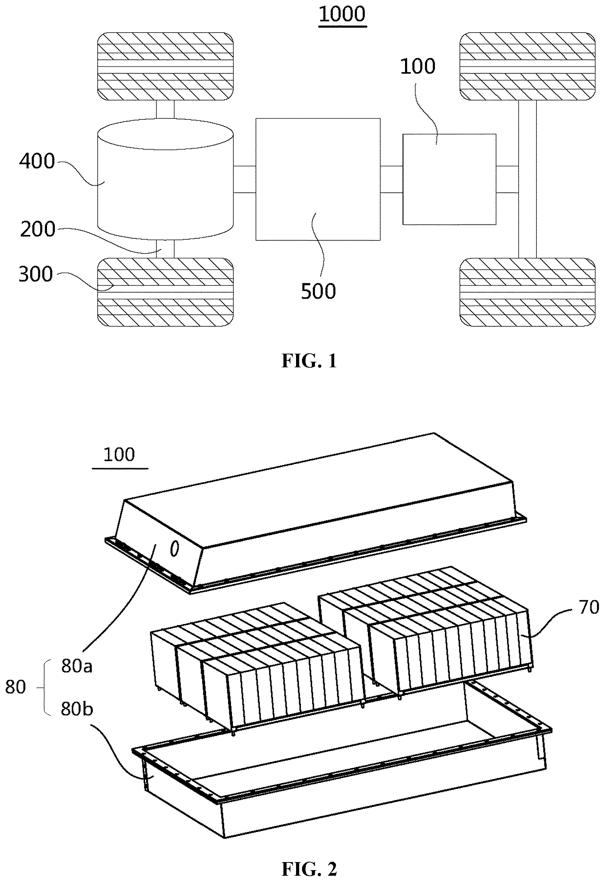

As shown in FIG. 1, the electrical device may be a vehicle 1000, e.g. a new energy vehicle, the new energy vehicle may be an all-electric vehicle, a hybrid vehicle, an extended-range electric vehicle or the like; or the electrical device may also be an unmanned aerial vehicle, a ship or the like. Specifically, the vehicle 1000 may include a battery 100, an axle 200, wheels 300 connected to the axle 200, a motor 400, and a controller 500, the controller 500 is used to control working of the motor 400, the motor 400 is used to drive the axle 200 to rotate, the rotation of the axle 200 drives the wheels 300 in rotation, and the battery 100 may be disposed at the bottom, head or tail of the vehicle 1000 to provide electrical energy for working of the motor 400 and other components in the vehicle.

As shown in FIG. 2, a battery 100 assembled by using a cell stacking apparatus and battery assembling apparatus disclosed in an embodiment of the present application may include a box assembly 80 and a plurality of cells 70. The plurality of cells 70 may be in series connection, in parallel connection, or in parallel-series connection, the parallel-series connection refers to the plurality of cells 70 being both in series connection and parallel connection, the plurality of cells 70 may be first connected in series, in parallel, or in parallel-series connection to form a battery module, and multiple battery modules may be then connected in series, in parallel, or in parallel-series connection to form a whole, and are accommodated within the box assembly 80. Alternatively, all cells 70 may be directly connected together in series or in parallel or in parallel-series connection, and then an entirety composed of all the cells 70 may be accommodated within the box assembly 80.

The interior of the box assembly 80 is of a hollow structure, for example, the box assembly 80 may include a box body 80a and a cover 80b. The box body 80a and the cover 80b are fitted together in covering manner. For example, the box body 80a and the cover 80b may each be a hollow cuboid with only one respective face being an open face, an opening of the box body 80a and an opening of the cover 80b are arranged oppositely, and the box body 80a and the cover 80b are mutually fitted in covering manner to form a box with a closed chamber. Alternatively, the box body 80a is a rectangular parallelepiped with an opening and the cover 80b is in a plate shape, or the cover 80b is a rectangular parallelepiped with an opening and the box body 80a is in a plate shape, the box body 80a and the cover 80b being arranged oppositely and fitted in covering manner to form the box assembly 80 with a closed chamber. After at least one cell 70 is connected in parallel or in series or in parallel-series connection, it is placed within the closed chamber formed after the box body 80a and the cover 80b are fitted in covering manner. The cell 70 includes a lithium-ion secondary battery, a lithium-ion primary battery, a lithium-sulfur battery, a sodium/lithium-ion battery, a sodium-ion battery, a magnesium-ion battery, or the like, and the embodiments of the present disclosure are not limited in this regard.

In order to enable more clear understanding of positioning principle of a cell stacking apparatus of the present application, the structure of the cell stacking apparatus is first described in detail.

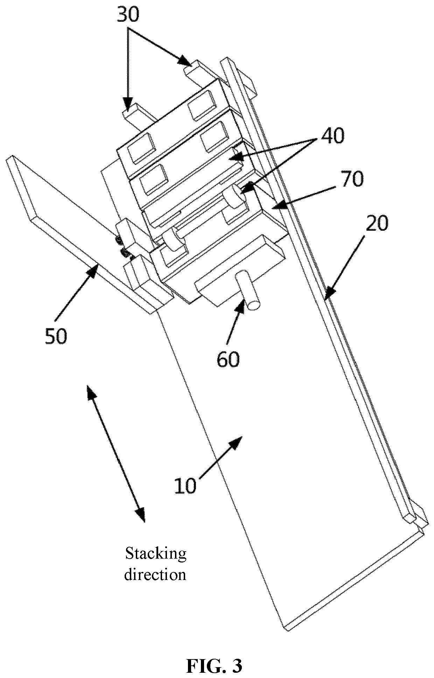

In some embodiments, with reference to FIGS. 3, 4, and 5, the cell stacking apparatus includes a first limiting device 10, a second limiting device 20, and a third limiting device 30, the first limiting device 10 is configured to limit a bottom face 711 of a cell 70, the second limiting device 20 is configured to limit a first side 712 of the cell 70, the third limiting device 30 is configured to limit a second side 713 of the cell 70, wherein the bottom face 711, the first side 712, and the second side 713 intersect one another.

By providing the first limiting device 10, the second limiting device 20, and the third limiting device 30, the bottom face 711, the first side 712, and the second side 713 of the cell 70 may be limited separately. The first limiting device 10 not only limits the bottom face 711 of the cell 70, but also may support gravity of the entire cell 70, and the bottom face 711, the first side 712, and the second side 713 intersect one another, that is, the bottom face 711, the first side 712, and the second side 713 are adjacent to one another. Therefore it is possible to limit three sides of the cell 70, thereby positioning the single cell 70, improving stacking quality, avoiding the problem of rework due to detecting unsatisfactory stacking quality after stacking is completed, and effectively improving stacking efficiency; further, it is also possible to improve the probability of successful forming of a module composed of multiple cells 70 and improve assembly efficiency of an entire battery.

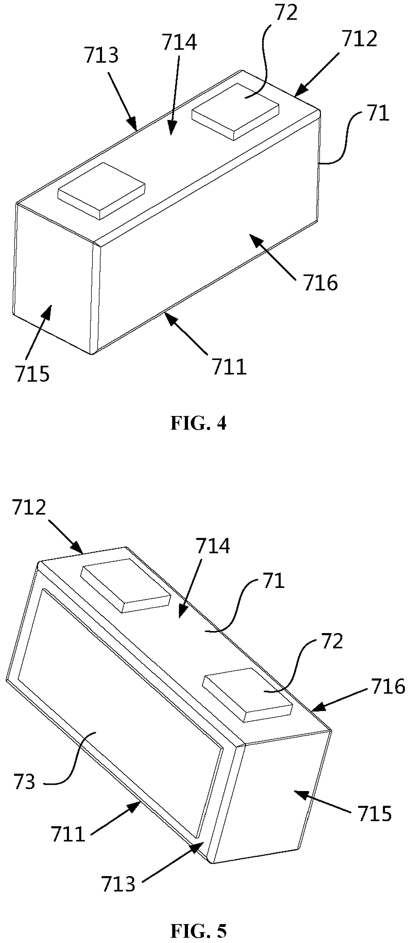

As shown in FIGS 4 and 5, they are structural schematic diagrams of a cell 70 applicable to an embodiment of a cell stacking apparatus disclosed in the present application.

As shown in FIG. 4, the cell 70 includes a cell body 71 and two terminals 72 disposed on the top of the cell body 71. The two terminals 72 are different in polarity. The terminals 72 are electrically connected to the cell body 71, and the terminals 72 may also be connected to other cells 70 or electrical components. The cell body 71 is in the shape of a rectangular parallelepiped, the cell body 71 includes a bottom face 711, a first side 712, a second side 713, a top face 714 that is disposed opposite and parallel to the bottom face 711, a third side 715 that is disposed opposite and parallel to the first side 712, and a fourth side 716 that is disposed opposite and parallel to the second side 713. The bottom face 711, the first side 712, and the second side 713 are perpendicular to and intersect one another.

For the cell 70 as shown in FIG. 4, when multiple cells 70 are stacked, liquid glue may be applied on the second side 713 and/or the fourth side 716 of the cell 70, and two adjacent cells 70 are adhesively connected through the liquid glue to avoid relative movement between the respective cells 70 after being stacked.

As shown in FIG. 5, the cell 70 includes a cell body 71, two terminals 72 disposed on the top of the cell body 71, and a spacer 73 disposed on a side of the cell body 71. The two terminals 72 are different in polarity. The terminals 72 are electrically connected to the cell body 71, and the terminals 72 may also be connected to other cells 70 or electrical components. The cell body 71 is in the shape of a rectangular parallelepiped, the cell body 71 includes a bottom face 711, a first side 712, a second side 713, a top face 714 that is disposed opposite and parallel to the bottom face 711, a third side 715 that is disposed opposite and parallel to the first side 712, and a fourth side 716 that is disposed opposite and parallel to the second side 713. The bottom face 711, the first side 712, and the second side 713 are perpendicular to and intersect one another.

In the embodiment shown in FIG. 5, the spacer 73 is mounted on the second side 713 of the cell body 71. In other embodiments, the spacer 73 may also be mounted on the fourth side 716 of the cell body 71 or both the second side 713 and the fourth side 716 of the cell body 71 may be provided with the spacer 73 thereon. A side of the spacer 73 away from the cell body 71 is provided with a solid adhesive, and when multiple cells 70 are stacked, two adjacent cells 70 are adhesively connected through the spacer 73 to avoid relative movement between the various cells 70 after being stacked.

It is be noted that the embodiments of the cell stacking apparatus disclosed in the present application are not limited to stacking of the cell 70 as shown in FIGS. 4 and 5, and may also be used to stack cells with other structures, such as cells with a bottom face, a first 712, and a second side 713 not perpendicular to one another etc.

In some embodiments, the cell stacking apparatus further includes at least one of a fourth limiting device 40, a fifth limiting device 50, and a sixth limiting device 60. For example, the cell stacking apparatus further includes a fourth limiting device 40; the cell stacking apparatus further includes a fifth limiting device 50; the cell stacking apparatus further includes a sixth limiting device 60; the cell stacking apparatus further includes a fourth limiting device 40 and a fifth limiting device 50; the cell stacking apparatus further includes a fifth limiting device 50 and a sixth limiting device 60; the cell stacking apparatus further includes a fourth limiting device 40 and a sixth limiting device 60; alternatively, the cell stacking apparatus further includes a fourth limiting device 40, a fifth limiting device 50, and a sixth limiting device 60.

The fourth limiting device 40 is configured to drive a cell 70 to move along a direction perpendicular to a top face 714 of the cell 70 and is used to limit the top face 714;
the fifth limiting device 50 is configured to drive the cell 70 to move along a direction perpendicular to a third side 715 of the cell 70 and is used to limit the third side 715, the third side 715 being arranged opposite to the first side 712;
the sixth limiting device 60 is configured to drive the cell 70 to move along a direction perpendicular to a fourth side 716 of the cell 70 and is used to limit the fourth side 716, the fourth side 716 being arranged opposite to the second side 713.

With the fourth limiting device 40, the cell 70 may be driven to move along the direction perpendicular to the top face 714 of the cell 70, enabling the cell 70 to move to where the bottom face 711 of the cell 70 is in touch with a limiting portion of the first limiting device 10 under the driving of the fourth limiting device 40. Further, the fourth limiting device 40 may also limit the top face 714 of the cell 70 after stopping moving, thereby achieving the purpose of limiting the cell 70 between the first limiting device 10 and the fourth limiting device 40, and achieving simultaneous limiting of the bottom and top faces 711 and 714 of the cell 70.

With the fifth limiting device 50, the cell 70 may be driven to move along the direction perpendicular to the third side 715 of the cell 70, enabling the cell 70 to move to where the first side 712 of the cell 70 is in touch with a limiting portion of the second limiting device 20 under the driving of the fifth limiting device 50. Further, the fifth limiting device 50 may also limit the third side 715 of the cell 70 after stopping moving, thereby achieving the purpose of limiting the cell 70 between the second limiting device 20 and the fifth limiting device 50, and achieving simultaneous limiting of the first and third sides 712 and 715 of the cell 70.

With the sixth limiting device 60, the cell 70 may be driven to move along the direction perpendicular to the fourth side 716 of the cell 70, enabling the cell 70 to move to where the second side 713 of the cell 70 is in touch with a limiting portion of the third limiting device 30 under the driving of the sixth limiting device 60. Further, the sixth limiting device 60 may also limit the fourth side 716 of the cell 70 after stopping moving, thereby achieving the purpose of limiting the cell 70 between the third limiting device 30 and the sixth limiting device 60, and achieving simultaneous limiting of the second and fourth sides 713 and 716 of the cell 70.

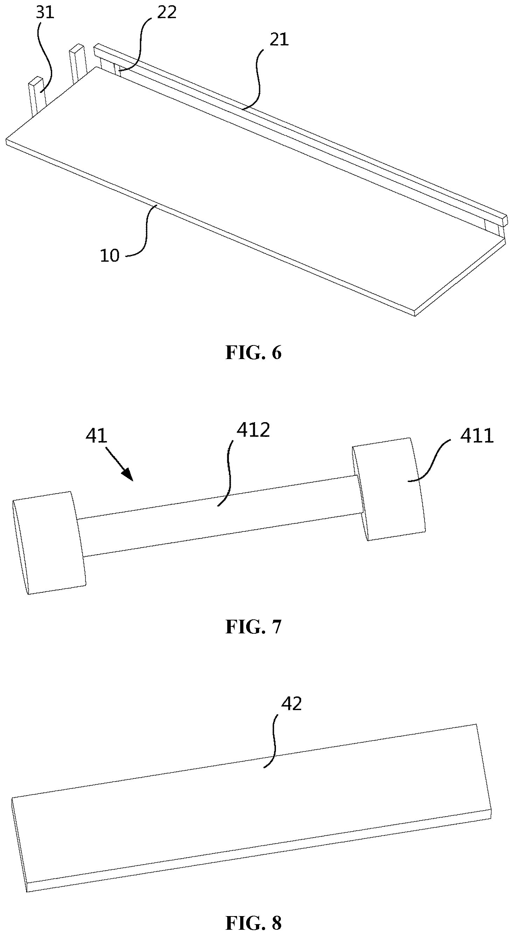

Structures of some constituent components in some embodiments of the cell stacking apparatus provided in the present application will be introduced below with reference to FIGS. 6 to 12.

As shown in FIG. 6, the first limiting device 10 may in a flat plate structure. This structure may provide a relatively flat limiting face so as to limit and support a bottom face 711 of a cell 70, and may also improve flatness for touching of the limiting face with the bottom face 711, improving limiting effect and supporting stability.

In other embodiments, the first limiting device 10 may also in other structural forms such as a plurality of slats or cylindrical bars arranged in spaced manner, which will not be described in detail here.

In some embodiments, in a direction perpendicular to a bottom face 711, the height of the second limiting device 20 is less than that of a cell 70.

By setting the height of the second limiting device 20 to be less than that of the cell 70, area of a portion of a first side 712 of the cell 70 in touch with the second limiting device 20 may be reduced, thereby reducing impact of planar flatness of the first side 712 on limiting precision of the second limiting device 20, and in turn, effectively controlling overall positioning precision for the cell 70.

As shown in FIG. 6, in some embodiments, the second limiting device 20 includes a second limiting plate 21 and a plurality of connecting plates 22 disposed in spaced manner along a direction perpendicular to a second side 713, the connecting plates 22 connect the second limiting plate 21 and the first limiting device 10, the second limiting plate 21 is in a long bar shape extending along the direction perpendicular to the second side 713, and in a direction perpendicular to a bottom face 711, the height of the second limiting plate 21 is less than that of a cell 70.

By providing the connecting plates 22, the second limiting plate 21 and the first limiting device 10 may be connected together, that is, connection between the second limiting device 20 and the first limiting device 10 is achieved, and relative stability of the second limiting device 20 and the first limiting device 10 is improved.

By providing the connecting plates 22, a distance between the second limiting plate 21 and the bottom face 711 of the cell 70 may also be increased in the direction perpendicular to the bottom face 711, thereby raising a limiting position of the second limiting plate 21 for a first side 712, avoiding the problem that the cell 70 is tipped over due to the limiting position of the second limiting plate 21 for the first side 712 being too low, and effectively improving positioning stability and safety of the cell 70.

The plurality of connecting plates 22 may have a limiting action on the first side 712 of the cell 70. By providing the plurality of connecting plates 22 arranged in spaced manner, total area where the plurality of connecting plates 22 limit the position of the cell 70 may be reduced, thereby decreasing the impact of unevenness between limiting portions of the plurality of connecting plates 22 on limiting precision for the first side 712. Of course, if a distance between a side of the second limiting plate 21 close to the cell 70 and the cell 70 is set to be less than that between a side of the connecting plate 22 close to the cell 70 and the cell 70, then it is possible to cause the plurality of connecting plates 22 to have no limiting action for the first side 712 of the cell 70. At which time, the second limiting device 20 limits the first side 712 of the cell 70 through the second limiting plate 21. The impact of the unevenness of the limiting portions of the plurality of connecting plates 22 on the limiting precision for the cell 70 is minimized.

The second limiting plate 21 is arranged in the long bar shape extending along the direction perpendicular to the second side 713, and the second limiting plate 21 may then be allowed to be continuous in the direction perpendicular to the second side 713, thereby ensuring a plurality of cells can all be limited by the second limiting plate 21 when the plurality of cells are stacked along the direction perpendicular to the second side 713, and avoiding affecting of the limiting action on the certain cell 70 due to there being a gap for the second limiting plate 21 in the direction perpendicular to the second side 713.

The height of the second limiting plate 21 is less than that of the cell 70 in the direction perpendicular to the bottom face 711, and in this way, area of a portion of the first side 712 of the cell 70 in touch with the second limiting plate 21 may be reduced, thereby reducing impact of planar flatness of the first side 712 on limiting precision of the second limiting plate 21, and in turn, effectively controlling overall positioning precision for the cell 70.

In other embodiments, the second limiting device 20 may also in structural forms such as a plurality of slats or cylinders arranged in vertically spaced manner, which will not be described in detail here.

As shown in FIG. 6, in some embodiments, the third limiting device 30 includes a plurality of limiting blocks 31 arranged in spaced manner along a direction perpendicular to a first side 712.

By providing the plurality of limiting blocks 31 arranged in spaced manner, limiting area of the third limiting device 30 may be reduced by means of adding a gap, thereby decreasing impact of the flatness of a second side 713 of a cell 70 upon limiting precision of the third limiting device 30.

Of course, in other embodiments, the third limiting device 30 may also in other structural forms such as a long slat or a plurality of cylinders arranged in spaced manner, which will not be described in detail here.

As shown in FIG. 7, in some embodiments, the fourth limiting device 40 includes a first limiting member 41, and the first limiting member 41 is configured to press against a top face 714 of a cell 70 while the sixth limiting device 60 drives the cell 70 to move along a direction perpendicular to a fourth side 716.

By providing the first limiting member 41 and causing the first limiting member 41 to press against the top face 714 of the cell 70 while the sixth limiting device 60 drives the cell 70 to move along the direction perpendicular to the fourth side 716, the process where the sixth limiting device 60 drives the cell 70 to move along the direction perpendicular to the fourth side 716 can be achieved under the state of causing the cell 70 to press against at the top face 714 by the first limiting member 41, that is, the state of limiting the top face 714 of the cell 70, such that positioning of a second side 713 and the fourth side 716 of the cell 70 is achieved without changing the position of the top face 714 of the cell 70, thereby preventing the position of the top face 714 of the cell 70 from being affected by the positioning process of the second side 713 and the fourth side 716. After the positioning of the second side 713 and the fourth side 716 is completed, this, in fact, realizes the positioning of the second side 713, the fourth side 716, the bottom face 711, and the top face 714 at the same time.

There are many choices for specific structure of the first limiting member 41. For example, the first limiting member 41 may include a rolling member 411 that is in rolling fit with the cell 70, a sliding member that is in sliding fit with the cell 70 or the like.

In some embodiments, the first limiting member 41 includes a plurality of rolling members 411 and/or a plurality of sliding members, and the plurality of rolling members 411 and/or the plurality of sliding members are arranged in spaced manner along a direction perpendicular to the first side 712.

By providing the plurality of rolling elements 411 and/or the plurality of sliding elements, limiting and supporting for multiple positions of the top face 714 may be achieved, thereby improving limiting effect on the top face 714.

In some embodiments, the first limiting member 41 further includes a first connecting shaft 412, and the first connecting shaft 412 is connected between two adjacent rolling members 411 or connected between two adjacent sliding members.

By providing the first connecting shaft 412, two rolling members 411 may be connected together, improving relative stability between the two rolling members 411, and also enabling synchronization for movement of the two rolling elements 411. The first connecting shaft 412 may be in a structural form such as a cylinder or a rectangular parallelepiped.

As shown in FIG. 8, in some embodiments, the fourth limiting device 40 further includes a second limiting member 42, the second limiting member 42 is located upstream of the first limiting member 41 in a stacking direction of a plurality of cells 70, and the second limiting member 42 and the first limiting member 41 separately press against the top faces 714 of the different cells 70.

By providing the second limiting member 42 and disposing the second limiting member 42 upstream of the first limiting member 41, it is possible to cause the second limiting member 42 to press against a top face 714 of another cell 70 located upstream while the first limiting member 41 presses against the top face 714 of the cell 70 located downstream, thereby limiting the top face 714 of the cell 70 located upstream and the top face 714 of the cell 70 located downstream at the same time, and avoiding the problem that misalignment of positions of the top faces 714 of the upstream and downstream cells 70 is caused when stacking another cell 70.

In some embodiments, the second limiting member 42 and the first limiting member 41 separately press against the top faces 714 of two adjacent cells 70.

In some embodiments, when the first limiting member 41 and a cell 70 which it presses against move relatively, the second limiting member 42 is configured to remain fixed relative to the cell 70 which it presses against in a direction perpendicular to a second side 713.

By configuring the second limiting member 42 to remain fixed relative to the cell 70 which it presses against in the direction perpendicular to the second side 713, it is possible that there is no relative movement between the second limiting member 42 and the cell 70 which the second limiting member 42 presses against in the direction perpendicular to the second side 713, thereby improving limiting effect of the second limiting member 42 on a top face 714 in a direction perpendicular to the top face 714, and in turn, maintaining relative stability of the cell 70 that has been positioned.

In some embodiments, the second limiting member 42 includes a limiting face that contacts a top face 714 of a cell 70 and limits the top face 714 of the cell 70.

By providing the limiting face on the second limiting member 42, it is possible that there is face contact between the second limiting member 42 and the top face 714 of the cell 70, thereby enlarging limiting area for limiting the top face 714 and improving limiting effect for the top face 714.

As shown in FIG. 8, the second limiting member 42 is in flat plate structure, which facilitates providing a relatively flat limiting face, thereby improving limiting effect on the top face 714 of the cell 70.

In other embodiments, the second limiting member 42 may also in structural forms such as a plurality of bar-shaped plates arranged in spaced manner, which will not be described in detail here.

In some embodiments, the first limiting member 41 and the second limiting member 42 may separately press against two terminals 72 of a cell 70. Top faces of the two terminals 72 are relatively flat, which may improve stability of contact with the first limiting member 41 and the second limiting member 42.

As shown in FIGS and 9 and 10, in some embodiments, the fifth limiting device 50 includes one or more limiting members for limiting a third side 715 of a cell 70, and the plurality of limiting members are arranged along a direction perpendicular to a second side 713.

In an embodiment in which the fifth limiting device 50 includes one limiting member, when a plurality of cells 70 are stacked along a direction perpendicular to second sides 713, limiting effect of the limiting member on the plurality of different cells 70 may be achieved in a way of causing the fifth limiting device 50 to move along the direction perpendicular to the second sides 713.

In an embodiment in which the fifth limiting device 50 includes a plurality of limiting members and the plurality of limiting members are arranged along a direction perpendicular to a second side 713, limiting effect on a plurality of cells 70 may be achieved through the plurality of limiting members, thereby reducing or omitting movement of the fifth limiting device 50 along a direction perpendicular to the second side 713.

The plurality of limiting members may be arranged in spaced manner or continuously in the direction perpendicular to the second side 713, which may be determined depending on a size of limiting area for limiting a third side 715 of the cell 70.

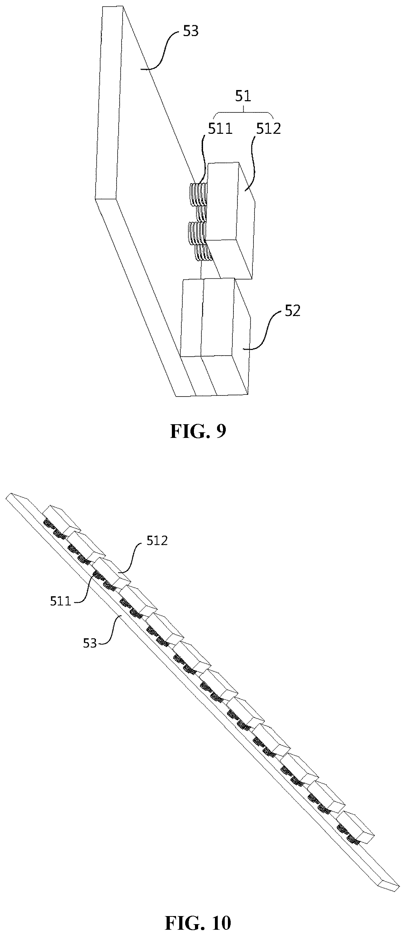

As shown in FIG. 9, the fifth limiting device 50 includes two limiting members arranged in spaced manner along a direction perpendicular to the second side 713; as shown in FIG. 10, the fifth limiting device 50 includes 12 limiting members arranged in spaced manner along the direction perpendicular to the second side 713.

In some embodiments, at least one of one or more limiting members includes a third limiting member 51, the third limiting member 51 includes an elastic member 511, and the elastic member 511 is configured to provide elastic force in a direction perpendicular to the third side 715.

By providing the elastic member 511, the elastic force may be provided in the direction perpendicular to the third side 715, thereby allowing lengths of a plurality of cells 70 to be different in the direction perpendicular to the third side 715.

During actual production, the lengths of the various cells 70 may be different in the direction perpendicular to the third side 715 due to manufacturing errors etc., and when at least one of the one or more limiting members includes the third limiting member 51, the third limiting member 51 including the elastic member 511, the elastic member 511 being configured to provide elastic force in the direction perpendicular to the third side 715, it may be avoided that difference in the lengths of the plurality of cells 70 in the direction perpendicular to the third side 715 affects limiting effect of other limiting members in the fifth limiting device 50 on the third sides 715 of other cells 70.

The elastic member 511 may be made with a spring or elastic rubber etc.

In some embodiments, the third limiting member 51 further includes a first limiting plate 512 connected to the elastic member 511, and the first limiting plate 512 includes a limiting portion for limiting a third side 715 of a cell 70.

By providing the first limiting plate 512, the limiting portion that is smoother and relatively greater in rigidity than the elastic member 511 may be provided, thereby improving the limiting effect.

In some embodiments, at least one of the one or more limiting members includes a fourth limiting member 52, and the fourth limiting member 52 is rigid in a direction perpendicular to a third side 715.

By providing the fourth limiting member 52 as a structure that is rigid in the direction perpendicular to the third side 715, more certain limiting effect may be provided as compared to the third limiting member 51 including an elastic member 511.

The fourth limiting member 52 may include one thick limiting block, or may include a plurality of limiting blocks that are thin and connected as a whole.

In some embodiments, the fifth limiting device 50 further includes a mounting bracket 53, and one or more limiting members are mounted on the mounting bracket 53.

By providing the mounting bracket 53, the one or more limiting members may be mounted on the mounting bracket 53, thereby providing stable support for the one or more limiting members.

Moreover, with the one or more limiting members mounted on the mounting bracket 53, the one or more limiting members may be driven synchronously by means of driving the mounting bracket 53.

In an embodiment in which the mounting bracket 53 is not provided, the one or more limiting members may be driven individually and separately.

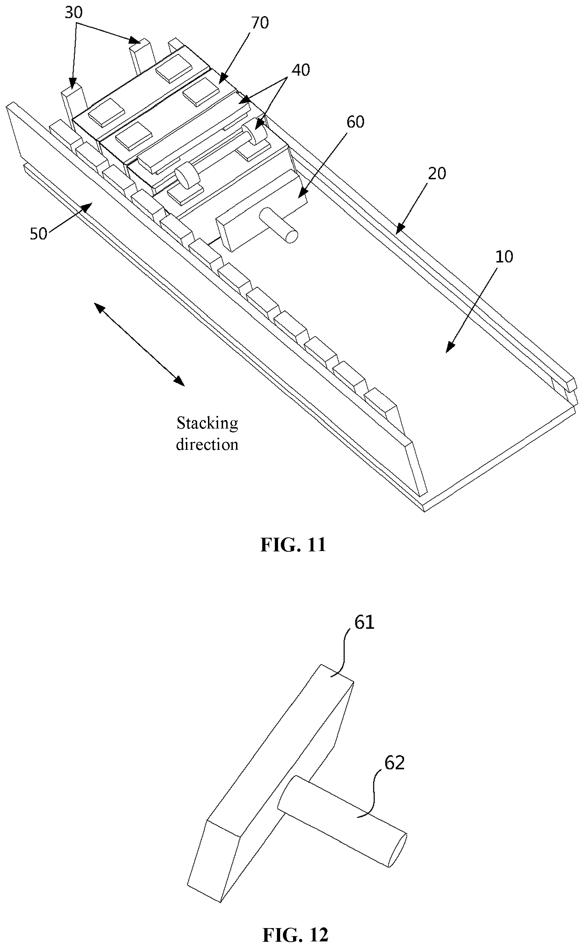

As shown in FIG. 11, it is a structural schematic diagram of a cell stacking apparatus using a fifth limiting device 50 embodiment shown in FIG. 10.

In this embodiment, before the number of stacked cells 70 does not exceed 12, the fifth limiting device 50 does not need to move along a direction perpendicular to a second side 713.

In some embodiments, the fourth limiting device 40 and/or the fifth limiting device 50 are configured to be movable in a direction perpendicular to a second side 713, so that when the number of stacked cells 70 increases, limiting action on newly stacked cells 70 may be achieved by means of causing the fourth limiting device 40 and/or the fifth limiting device 50 to move along the direction perpendicular to the second side 713.

As shown in FIG. 12, the sixth limiting device 60 includes a third limiting plate 61 and a second connecting shaft 62 mounted on a side of the third limiting plate 61 away from the cell 70. The second connecting shaft 62 is used to connect a driving component to drive the third limiting plate 61 to move along a direction perpendicular to a second side 713.

The third limiting plate 61 is in flat plate structure, which may provide a relatively flat limiting face, improving limiting effect on a fourth side 716. The second connecting shaft 62 may be in a cylindrical structural form, or may be in other structural forms such as a rectangular parallelepiped.

In other embodiments, the sixth limiting device 60 may also in structural forms such as a plurality of bar-shaped blocks arranged in spaced manner, which will not be described in detail here.

Based on the cell stacking apparatus in the above embodiments, the present application also provides a battery assembling apparatus.

Structures and working processes of some embodiments of the cell stacking apparatus provided in the present application will be introduced below with reference to FIGS. 3 to 12.

In an embodiment shown in FIG. 3, the cell stacking apparatus includes a first limiting device 10, a second limiting device 20, a third limiting device 30, a fourth limiting device 40, a fifth limiting device 50, and a sixth limiting device 60.

As shown in FIG. 4, the cell 70 includes a cell body 71 and two terminals 72 disposed on the top of the cell body 71. The cell body 71 is in the shape of a rectangular parallelepiped, the cell body 71 includes a bottom face 711, a first side 712, a second side 713, a top face 714 that is disposed opposite and parallel to the bottom face 711, a third side 715 that is disposed opposite and parallel to the first side 712, and a fourth side 716 that is disposed opposite and parallel to the second side 713. The bottom face 711, the first side 712, and the second side 713 are perpendicular to and intersect one another.

As shown in FIG. 5, the cell 70 includes a cell body 71, two terminals 72 disposed on the top of the cell body 71, and a spacer 73 disposed on a side of the cell body 71. The cell body 71 is in the shape of a rectangular parallelepiped, the cell body 71 includes a bottom face 711, a first side 712, a second side 713, a top face 714 that is disposed opposite and parallel to the bottom face 711, a third side 715 that is disposed opposite and parallel to the first side 712, and a fourth side 716 that is disposed opposite and parallel to the second side 713. The bottom face 711, the first side 712, and the second side 713 are perpendicular to and intersect one another.

The first limiting device 10 is used to limit the bottom face 711 of the cell 70, the second limiting device 20 is used to limit the first side 712 of the cell 70, the third limiting device 30 is used to limit the second side 713 of the cell 70, and the fourth limiting device 40 is used to drive the cell 70 to move along a direction perpendicular to the top face 714 of the cell 70 and to limit the top face 714; the fifth limiting device 50 is used to drive the cell 70 to move along a direction perpendicular to the third side 715 of the cell 70 and to limit the third side 715; the sixth limiting device 60 is used to drive the cell 70 to move along a direction perpendicular to the fourth side 716 of the cell 70 and to limit the fourth side 716.

As shown in FIG. 6, the first limiting device 10 includes a flat plate limiting plate, and the limiting plate has a limiting face in contact with the bottom face 711 of the cell 70.

The second limiting device 20 includes a long bar shaped second limiting plate 21 and two connecting plates 22, and the two connecting plates 22 are used to connect the second limiting plate 21 and the first limiting device 10. In a direction perpendicular to the bottom face 711, the height of the second limiting plate 21 is less than that of the cell 70.

The third limiting device 30 includes two limiting blocks 31 extending along a direction perpendicular to the bottom face 711, and the two limiting blocks 31 are arranged in spaced manner along a direction perpendicular to the first side 712. The two limiting blocks 31 are mounted on the first limiting device 10.

In an embodiment as shown in FIG. 6, the first limiting device 10, the second limiting device 20, and the third limiting device 30 are connected as a whole.

As shown in FIG. 7, the first limiting member 41 includes two rolling members 411 and a first connecting shaft 412 connected between the two rolling members 411, and the first connecting shaft 412 is in cylindrical shape.

As shown in FIG. 8, the second limiting member 42 includes a flat plate limiting plate, and the limiting plate has a limiting face in contact with the top face 714 of the cell 70.

As shown in FIG. 9, the fifth limiting device 50 includes a mounting bracket 53, as well as one third limiting member 51 and one fourth limiting member 52 mounted on the mounting bracket 53, the third limiting member 51 includes an elastic member 511 and a first limiting plate 512, and the elastic member 511 is connected between the mounting bracket 53 and the first limiting plate 512. The elastic member 511 provides elastic force in a direction perpendicular to the first side 712. The fourth limiting member 52 is rigid in the direction perpendicular to the first side 712.

As shown in FIG. 10, the fifth limiting device 50 includes a mounting bracket 53 and 12 third limiting members 51 mounted on the mounting bracket 53. The 12 third limiting members 51 are arranged in spaced manner along a direction perpendicular to the second side 713.

As shown in FIG. 3, it is a structural schematic diagram of a cell stacking apparatus embodiment using the fifth limiting device 50 as shown in FIG. 9; as shown in FIG. 11, it is a structural schematic diagram of a cell stacking apparatus embodiment using the fifth limiting device 50 as shown in FIG. 10.

As shown in FIG. 12, the sixth limiting device 60 includes a third limiting plate 61 and a second connecting shaft 62 mounted on a side of the third limiting plate 61 away from the cell 70. The third limiting plate 61 is in flat plate structure, and the second connecting shaft 62 is in cylindrical shape.

For the cell 70 structure as shown in FIG. 4, to improve relative stability of various cells 70 after being stacked, liquid glue may be applied on the second side 713 and/or the fourth side 716 of the cell 70, so that two adjacent cells 70 are adhesively connected through the liquid glue.

For the cells 70 adhesively connected using the liquid glue, the cell stacking apparatus embodiment as shown in FIG. 11 may be used for their stacking. Even if positions of two cells 70 are misaligned during adhesive connection due to fluidity of the liquid glue, flexible positioning may be performed through the elastic member 511 included in the third limiting member 51.

The specific operating process is as follows:
as shown in FIG. 11, a stacking direction of a plurality of cells 70 is a direction perpendicular to the second side 713, and the fourth limiting device 40 and/or the fifth limiting device 50 are movable along the stacking direction, the fifth limiting device 50 including 12 third limiting members 51.

First, a first cell 70 is placed on the first limiting device 10;
then, the first limiting member 41 and/or the second limiting member 42 in the fourth limiting device 40 are driven to move along a direction perpendicular to a bottom face 711, so that the bottom face 711 of the cell 70 is in touch with the first limiting device 10;
the fifth limiting device 50 is driven to move along a direction perpendicular to a first side 712, so that the first side 712 of the cell 70 is in touch with the second limiting plate 21 in the second limiting device 20; and
the sixth limiting member 60 is driven to move along a direction perpendicular to a second side 713, so that the second side 713 of the cell 70 is in touch with a limiting block 31 in the third limiting device 30;
wherein there is no limitation on the order of steps of driving the fourth limiting device 40, driving the fifth limiting device 50, and driving the sixth limiting device 60;
next, a second cell 70 is placed the first limiting device 10;
the sixth limiting device 60 is first driven to move along a direction perpendicular to a second side 713, so that the second side 713 of the second cell 70 is close to a fourth side 716 of the first cell 70, and there is a preset distance between the second side 713 of the second cell 70 and the fourth side 716 of the first cell 70;
then, the fifth limiting device 50 is driven to move along a direction perpendicular to a first side 712 (here, whether the fifth limiting device 50 needs to move along the direction perpendicular to the first side 712 movement may be judged according to the position of the fifth limiting device 50), so that one of the third limiting members 51 is caused to oppose the first cell 70, and the other third limiting member 51 is caused to oppose the second cell 70; driving the fifth limiting device 50 to move along the direction perpendicular to the first side 712 is then continued, so that the first side 712 of the second cell 70 is in touch with the second limiting plate 21 in the second limiting device 20;
next, the fourth limiting device 40 is driven to move along a direction perpendicular to a bottom face 711, the first limiting member 41 is contacted with a top face 714 of the second cell 70, and the second limiting member 42 is contacted with a top face 714 of the first cell 70, allowing touching between the bottom face 711 of the second cell 70 and the first limiting device 10;
while the first limiting member 41 is in contact with the top face 714 of the second cell 70 and the second limiting member 42 is in contact with the top face 714 of the first cell 70, the sixth limiting device 60 is driven to move along a direction perpendicular to the second side 713, so that the second side 713 of the second cell 70 is in contact the fourth side 716 of the first cell 70;
at this point, stacking of the second cell 70 is complete;
and a third battery cell 70, a fourth battery cell 70... are stacked in sequence according to the stacking process of the second cell 70.

For the cell 70 structure as shown in FIG. 5, a spacer 73 is provided on a side of the cell body 71, a side of the spacer 73 away from the cell body 71 is provided with a solid adhesive, and when multiple cells 70 are stacked, two adjacent cells 70 are adhesively connected through the spacer 73 to avoid relative movement between the various cells 70 after being stacked.

For the cells 70 that are adhesively connected using the spacer 73 provided with solid glue, the cell stacking apparatus embodiment as shown in FIG. 3 may be used for their stacking. Before two cells 70 are adhesively connected, precise positioning is first performed through the fourth limiting member 52 with strong rigidity in the direction perpendicular to the first side 712, positioning in the direction perpendicular to the second side 713 is then performed through the sixth limiting device 60, and adhesive connection is achieved, avoiding the problem that misalignment occurs after adhesive connection and two cells 70 are difficult to separate and adhesively connect again.

The specific operating process is as follows:
as shown in FIG. 3, a stacking direction of a plurality of cells 70 is a direction perpendicular to the second side 713, and the fourth limiting device 40 and/or the fifth limiting device 50 are movable along the stacking direction, the fifth limiting device 50 including one third limiting member 51 and one fourth limiting member 52.

First, a first cell 70 is placed on the first limiting device 10;
then, the first limiting member 41 and/or the second limiting member 42 in the fourth limiting device 40 are driven to move along a direction perpendicular to a bottom face 711, so that the bottom face 711 of the cell 70 is in touch with the first limiting device 10;
the third limiting member 51 and/or the fourth limiting member 52 in the fifth limiting device 50 are driven to move along a direction perpendicular to a first side 712, so that the first side 712 of the cell 70 is in touch with the second limiting plate 21 in the second limiting device 20; and
the sixth limiting member 60 is driven to move along a direction perpendicular to a second side 713, so that the second side 713 of the cell 70 is in touch with a limiting block 31 in the third limiting device 30;
wherein there is no limitation on the order of steps of driving the fourth limiting device 40, driving the fifth limiting device 50, and driving the sixth limiting device 60;
next, a second cell 70 is placed the first limiting device 10;
the sixth limiting device 60 is first driven to move along a direction perpendicular to a second side 713, so that the second side 713 of the second cell 70 is close to a fourth side 716 of the first cell 70, and there is a preset distance between the second side 713 of the second cell 70 and the fourth side 716 of the first cell 70;
then, the fifth limiting device 50 is driven to move along a direction perpendicular to a first side 712 (here, whether the fifth limiting device 50 needs to move along the direction perpendicular to the first side 712 movement may be judged according to the position of the fifth limiting device 50), so that the third limiting member 51 is caused to oppose the first cell 70, and the fourth third limiting member 52 is caused to oppose the second cell 70; driving the fifth limiting device 50 to move along the direction perpendicular to the first side 712 is then continued, so that the first side 712 of the second cell 70 is in touch with the second limiting plate 21 in the second limiting device 20;
next, the fourth limiting device 40 is driven to move along a direction perpendicular to a bottom face 711, the first limiting member 41 is contacted with a top face 714 of the second cell 70, and the second limiting member 42 is contacted with a top face 714 of the first cell 70, allowing touching between the bottom face 711 of the second cell 70 and the first limiting device 10;
while the first limiting member 41 is in contact with the top face 714 of the second cell 70 and the second limiting member 42 is in contact with the top face 714 of the first cell 70, the sixth limiting device 60 is driven to move along a direction perpendicular to the second side 713, so that the second side 713 of the second cell 70 is in contact the fourth side 716 of the first cell 70;
at this point, stacking of the second cell 70 is complete;
and a third battery cell 70, a fourth battery cell 70... are stacked in sequence according to the stacking process of the second cell 70.

The cell stacking apparatus embodiment provided in the present application can effectively improve precision of cell stacking, improve positioning stability, improve stacking quality, ensure that side misalignment never occurs between the cells, and prevent failure of modules to form later; dimensional qualification rate of the modules (including but not limited to side profile and bottom profile/planarity of the modules) can be effectively increased.

In the cell stacking apparatus embodiment provided in the present application, with a fourth limiting device pressurizing a top face of a cell, the cell may be precisely positioned in a direction perpendicular to a bottom face; the fourth limiting device includes a first limiting member with a rolling member, allowing for positioning in a direction perpendicular to a second side while pressurizing at the top; the fourth limiting device further includes a second limiting member that may mutually cooperate with the first limiting member to allow for stepwise pressurization for the top of the cell and stepwise withdrawal of the fourth limiting device; by using a third limiting member including an elastic member, tolerance for the length of the cell in a direction perpendicular to the first side may be improved to achieve progressive precise positioning of cells of different lengths; by providing the fourth limiting member that is rigid in the direction perpendicular to the first side, rigid positioning may be achieved in the direction perpendicular to the first side, which is applicable to the cell adhesively connected using a spacer provided with solid glue; the height of a second limiting device is less than that of the cell, and then impact of the planarity of the cell on positioning precision may be reduced.

While the present application has been described with reference to the preferred embodiments, various modifications may be made and components therein may be replaced with equivalents without departing from the scope of the present application. In particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A cell stacking apparatus, comprising:
a first limiting device (10) configured to limit a bottom face (711) of a cell (70);
a second limiting device (20) configured to limit a first side (712) of the cell (70); and
a third limiting device (30) configured to limit a second side (713) of the cell (70),
wherein the bottom face (711), the first side (712), and the second side (713) intersect one another.

2. The cell stacking apparatus according to claim 1, wherein the cell stacking apparatus further comprises at least one of a fourth limiting device (40), a fifth limiting device (50), and a sixth limiting device (60),
the fourth limiting device (40) is configured to drive the cell (70) to move along a direction perpendicular to a top face (714) of the cell (70) and is used to limit the top face (714);
the fifth limiting device (50) is configured to drive the cell (70) to move along a direction perpendicular to a third side (715) of the cell (70) and is used to limit the third side (715), the third side (715) being arranged opposite to the first side (712); and
the sixth limiting device (60) is configured to drive the cell (70) to move along a direction perpendicular to a fourth side (716) of the cell (70) and is used to limit the fourth side (716), the fourth side (716) being arranged opposite to the second side (713).

3. The cell stacking apparatus according to claim 2, wherein the cell stacking apparatus further comprises a fourth limiting device (40) and a sixth limiting device (60), the fourth limiting device (40) comprises a first limiting member (41), and the first limiting member (41) is configured to press against the top face (714) of the cell (70) while the sixth limiting device (60) drives the cell (70) to move along the direction perpendicular to the fourth side (716).

4. The cell stacking apparatus according to claim 3, wherein the first limiting member (41) comprises a rolling member (411) that is in rolling fit with the cell (70) and/or a sliding member that is in sliding fit with the cell (70).

5. The cell stacking apparatus according to claim 4, wherein the first limiting member (41) comprises a plurality of the rolling members (411) and/or a plurality of the sliding members, and the plurality of rolling members (411) and/or the plurality of sliding members are arranged in spaced manner along a direction perpendicular to the first side (712).

6. The cell stacking apparatus according to any one of claims 3 to 5, wherein the fourth limiting device (40) further comprises a second limiting member (42), the second limiting member (42) is located upstream of the first limiting member (41) in a stacking direction of a plurality of the cells (70), and the second limiting member (42) and the first limiting member (41) separately press against the top faces (714) of the different cells (70).

7. The cell stacking apparatus according to claim 6, wherein when the first limiting member (41) and the cell (70) which it presses against move relatively, the second limiting member (42) is configured to remain fixed relative to the cell (70) which it presses against in a direction perpendicular to the second side (713).

8. The cell stacking apparatus according to claim 6 or 7, wherein the second limiting member (42) comprises a limiting face that contacts the top face (714) of the cell (70) and limits the top face (714) of the cell (70).

9. The cell stacking apparatus according to claim 2, wherein the fifth limiting device (50) comprises one or more limiting members for limiting the third side (715) of the cell (70), and the plurality of limiting members are arranged along the direction perpendicular to the second side (713).

10. The cell stacking apparatus according to any one of claims 3 to 8, wherein the cell stacking apparatus further comprises a fourth limiting device (40), a fifth limiting device (50), and a sixth limiting device (60), the fifth limiting device (50) comprises one or more limiting members for limiting the third side (715) of the cell (70), and the plurality of limiting members are arranged along the direction perpendicular to the second side (713).

11. The cell stacking apparatus according to claim 9 or 10, wherein at least one of the one or more limiting members comprises a third limiting member (51), the third limiting member (51) comprises an elastic member (511), and the elastic member (511) is configured to provide elastic force in the direction perpendicular to the third side (715).

12. The cell stacking apparatus according to claim 11, wherein the third limiting member (51) further comprises a first limiting plate (512) connected to the elastic member (511), and the first limiting plate (512) comprises a limiting portion for limiting the third side (715) of the cell (70).

13. The cell stacking apparatus according to any one of claims 9 to 12, wherein at least one of the one or more limiting members comprises a fourth limiting member (52), and the fourth limiting member (52) is rigid in the direction perpendicular to the third side (715).

14. The cell stacking apparatus according to any one of claims 9 to 13, wherein the fifth limiting device (50) further comprises a mounting bracket (53), and the one or more limiting members are mounted on the mounting bracket (53).

15. The cell stacking apparatus according to any one of claims 2 to 14, wherein the fourth limiting device (40) and/or the fifth limiting device (50) is configured to be movable along the direction perpendicular to the second side (713).

16. The cell stacking apparatus according to any one of claims 1 to 15, wherein in a direction perpendicular to the bottom face (711), the height of the second limiting device (20) is less than that of the cell (70).

17. The cell stacking apparatus according to any one of claims 1 to 16, wherein the second limiting device (20) comprises a second limiting plate (21) and a plurality of connecting plates (22) disposed in spaced manner along the direction perpendicular to the second side (713), the connecting plates (22) connect the second limiting plate (21) and the first limiting device (10), the second limiting plate (21) is in a long bar shape extending along the direction perpendicular to the second side (713), and in the direction perpendicular to the bottom face (711), the height of the second limiting plate (21) is less than that of the cell (70).

18. The cell stacking apparatus according to any one of claims 1 to 17, wherein the third limiting device (30) comprises a plurality of limiting blocks (31) arranged in spaced manner along the direction perpendicular to the first side (712).

19. A battery assembling apparatus, comprising the cell stacking apparatus according to any one of claims 1 to 18.
